# EUROPÄISCHE PATENTSCHRIFT

(11) **EP 1 394 118 B1**
(45) Veröffentlichungstag und Bekanntmachung des Hinweises auf die Patenterteilung: **19.01.2005**
(21) Anmeldenummer: 02018977.5
(22) Anmeldetag: 27.08.2002
(51) Int. Cl.: C02F 1/32, C02F 1/78, H01J 65/04, B01J 19/12

(54) **Verfahren und Vorrichtung zur UV-Bestrahlung von Flüssigkeiten**
METHOD AND APPARATUS FOR THE UV RADIATION OF LIQUIDS
PROCEDE ET DISPOSITIF D'EXPOSITION DE LIQUIDES AUX RAYONS U.V

(43) Veröffentlichungstag der Anmeldung: 03.03.2004
(73) Patentinhaber: UMEX Dresden GmbH, 01217 Dresden (DE); Technische Universität Dresden, 01062 Dresden (DE)
(72) Erfinder: Johne, Steffen, 01108 Dresden (DE); Meyer, Andreas, Dr., 99099 Erfurt (DE); Herrmann, Heido, 99097 Erfurt (DE); Börnick, Hilmar, Dr., 01279 Dresden (DE)
(74) Vertreter: Liedtke, Klaus, Dr.

(56) Entgegenhaltungen:
- WO-A-01/09924
- DE-A- 19 708 149
- PATENT ABSTRACTS OF JAPAN vol. 010, no. 203 (C-360), 16. Juli 1986 (1986-07-16) -& JP 61 046290 A (TOSHIBA CORP), 6. März 1986 (1986-03-06)

## Beschreibung

Die Erfindung betrifft ein Verfahren und eine Vorrichtung zur UV-Bestrahlung von zu desinfizierenden Flüssigkeiten, bei dem mit einem Entladungsgefäß aus einem Quarzglaskörpers elektrodenlos UV-Strahlung angeregt wird.

Für die Desinfektion von Wässern oder anderen Flüssigkeiten wird in zunehmendem Maße UV-Strahlung verwendet. Für die zur UV-Behandlung von Flüssigkeiten benutzten Reaktoren sind vielfältige Ausführungen bekannt.

In DE 197 08 149 A1 ist eine Einrichtung beschrieben, die ein langgestrecktes Doppelmantelgefäß verwendet, bei dem sich in dem vom Doppelmantelgefäß umschlossenen Raum ein HF-Schwingkreis befindet.
Nachteilig wirkt sich bei dieser Anordnung aus, dass die nur teilweise Anordnung des Schwingkreises am Entladungsgefäß große Probleme bei der EMV-gerechten Gestaltung der UV-Strahlungsquelle bereitet. Bei der praktischen Anwendung kann deshalb mit derartigen Anordnungen nur ein geringer Wirkungsgrad für die Umwandlung der eingespeisten elektrischen Energie in UV-Strahlungsenergie erreicht werden.

Ferner ist nach DE 40 18 792 A1 eine Anordnung zur UV-Bestrahlung von Flüssigkeiten und Gasen bekannt, bei der eine UV-Lampe mit einem von einem Entladungsgemisch gefüllten Entladungsraum, der von einem langgestreckten Doppelmantelgefäß aus Quarzglas gebildet wird, bekannt. Im Inneren des Entladungsgefäßes ist eine langgestreckte Antenne, die mit einem Mikrowellengenerator gekoppelt, so angeordnet, dass sie von dem Entladungsgefäß umgeben ist. Ein optimaler Wirkungsgrad kann auch mit dieser Anordnung nicht erreicht werden, weil nur eine unzureichende Anpassung der elektrischen Parameter des Schwingkreises an die geometrischen Verhältnisse im Entladungsraum und im näheren Umfeld des Entladungsraumes erreicht wird.

Insbesondere zur Beseitigung von Verunreinigungen bei der Gewinnung von Trinkwasser ist die Beseitigung organischer Verbindungen, insbesondere die Beseitigung von Pflanzenschutzmitteln ein großes Problem. Es ist zwar möglich durch geeignete Aufbereitungsmaßnahmen den Atrazingehalt zu reduzieren, jedoch ist dies überwiegend durch Filtrationen und Absorptionen mit dem entsprechend hohen Aufwand durchzuführen. Diese Maßnahmen sind enorm kostenaufwendig und erfordern hohe Investitionen.

Für die Inaktivierung von Keimen durch UV-Bestrahlung ist die bevorzugt benutzte Wellenlänge die 254 nm Qecksilberlinie. Nachteilig wirkt sich dabei aus, dass keine dauerhafte Desinfektionswirkung erzielt wird, da intrazelluläre Reparaturmechanismen der abzutötenden Keimzelle zumindest eine teilweise Reaktivierung der Vitalfunktionen ermöglichen.

Nach DE 42 12 604 A1 ist ein Verfahren zur Aufbereitung von mit organischen Substanzen belastetem Rohtrinkwasser, insbesondere von nitrathaltigem Rohtrinkwasser, das mit Pflanzenschutzmitteln belastet ist, bekannt, bei dem zur Aufbereitung von Rohtrinkwasser eine Behandlung mit ultraviolettem Licht einer Wellenlänge < 230 nm erfolgt. Dabei wird entweder die kurzwelligen Anteile ausgefiltert oder es werden Nitrit zerstörenden Substanzen verwendet.

Nach JP 61046290 ist eine Anordnung zur Flüssigkeitsbehandlung bekannt, bei der eine Gasentladungskammer, die eine innere und eine äußere Quartzglas-Röhre aufweist, und die in einem hermetisch abgeschlossenen Gefäß mit Ein- und Auslass für ein Fluid angeordnet ist. Die Gasentladungskammer strahlt nach Anregung durch über eine Stabantenne eingestrahlte Mikrowellen ultraviolettes Licht ab und sterilisiert so ein durchströmendes Fluid.

Ferner ist in WO 001/09924 eine UV-Bestrahlungseinrichtung zur Behandlung von Flüssigkeiten beschrieben. Die Anordnung verfügt über eine elektrodenlose ultraviolette Lampe, die vorzugsweise mit Quecksilber gefüllt ist, einer Mikrowellenquelle zur Anregung der Lampe und einer Hülle zum Umschließen der Lampe, wobei die Hülle aus Quartzglas besteht. Die UV-Strahlung kann so gewählt werden, dass in dem durchströmenden Fluid entweder fotochemische Reaktionen oder molekulare Dissoziationsreaktionen angeregt werden, bei denen Ozon erzeugt werden kann. Dabei ist nachteilig, dass nur dann Ozon erzeugt wird, wenn in dem durchströmenden Fluid molekularer Sauerstoff enthalten ist.

Allen bekannten Anordnungen haftet der Nachteil an, dass sie nur einen begrenzten Wirkungsgrad erreichen.

Der Erfindung liegt die Aufgabe zugrunde, ein Verfahren und eine Anordnung der eingangs genannten Art so zu verbessern, dass eine nahezu dauerhafte Keimabtötung mit hohem Wirkungsgrad erreicht wird, dabei soll das Verfahren kontinuierlich durchführbar sein und eine nachträgliche oxidative Behandlung der aufzubereitenden Flüssigkeiten vermeiden.

Die Aufgabe wird erfindungsgemäß mit einem Verfahren, welches die in die im Anspruch 1 angegebenen Merkmale aufweist, und mit einer Vorrichtung, welches die in die im Anspruch 4 angegebenen Merkmale aufweist, gelöst.

Vorteilhafte Ausgestaltungen sind in den Unteransprüchen angegeben.

Die Erfindung verwendet ein Verfahren und eine Anlage zur UV-Bestrahlung von Flüssigkeiten bei gleichzeitiger Zugabe von Ozon, welches intern erzeugt wird. Es konnte experimentell nachgewiesen werden, dass bei der Einwirkung von UV-Strahlung mit 185 nm, die gegenüber der üblicherweise verwendeten Strahlung mit 254 nm wesentlich energiereichere ist, eine nahezu dauerhafte Keimabtötung erreicht wird.
Diese Strahlung kann mit herkömmlichen Bestrahlungseinrichtungen nicht genutzt werden, da diese Strahlungsanteile von der die UV-Quelle umgebenden Luft, die sich im Raum zwischen Strahler und Strahlerschutzrohr befindet, nahezu vollständig absorbiert wird. Zum anderen verhindern die üblicherweise verwendeten Quarzmaterialien einen Durchtritt dieser Strahlungsanteile durch die Glasgefäße.

Besonders vorteilhaft ist dabei, dass die Anordnung auch zur Reinigung von Trinkwasser verwendet werden kann. Der bei bekannten Anordnungen auftretende Nachteil besteht darin, dass bei der kurzwelligen Strahlung mit 185 nm das im Wasser immer vorhandene Nitrat fotochemisch zum Nitrit reduziert wird. Dabei können die Grenzwerte der Trinkwasserverordnung schnell überschritten werden, so dass eine Anwendung im Bereich der Trinkwasserdesinfektion aus diesem Grund nicht möglich ist. Bei der erfindungsgemäßen Anordnung wird gleichzeitig mit der kurzwelligen UV-Bestrahlung eine geringe Menge an Ozon zugegeben, wodurch die Bildung des Nitrits vollständig verhindert wird. Das für den ungestörten Desinfektionsprozess benötigte Ozon wird simultan mit dem verwendeten UV-Strahler erzeugt.

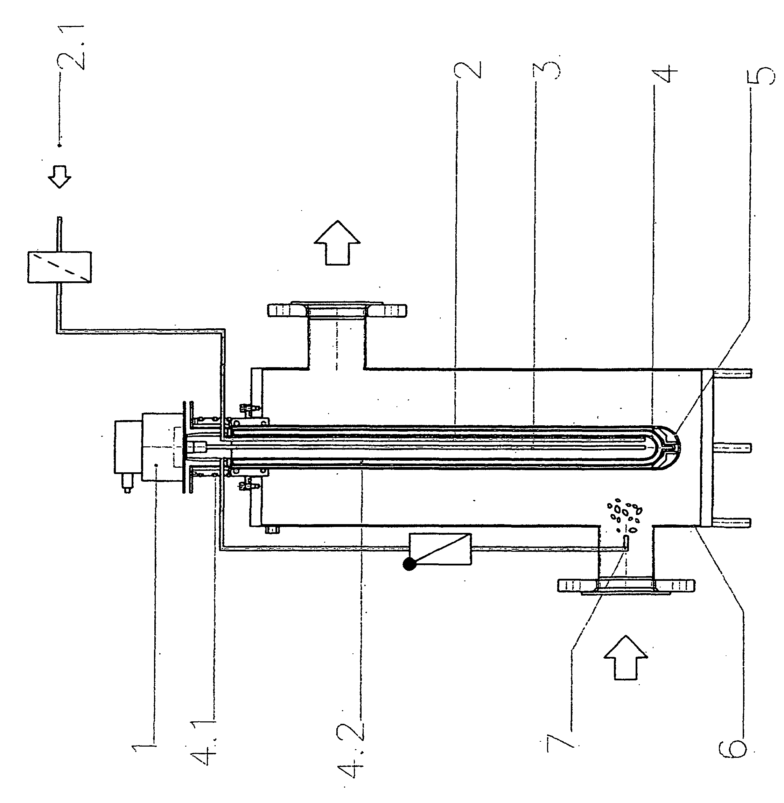

Die Erfindung wird im Folgenden an einem Ausführungsbeispiel näher erläutert. In der zugehörigen Zeichnung zeigt
Figur 1 einen Längsschnitt durch die Gesamtanordnung.

Das Entladungsgefäß aus hochreinem Quarzglas befindet sich von einem Quarzschutzrohr 5 geschützt in einem Reaktorgehäuse 6. Das Entladungsgefäß besteht aus einem langgestreckten Doppelmantelgefäß 4, das ein an der Oberseite angebrachtes Kopfteil 4.1 und dem darunter angeordneten Gasentladungsraum 4.2 in Form eines U-förmigen Rohres aufweist. In dem von dem Doppelmantelgefäß 4 umschlossenen Raum befindet sich eine Antenne 3 in Form eines Hohlzylinders, welche direkt mit dem am Kopfteil des Doppelmantelgefäßes 4 angeordneten Magnetron 1 verbunden ist, der von einem Gas aus Luft oder reinem Sauerstoff durchströmt wird. Dieses Gas tritt an der Eintrittsöffnung 2.1 in ein Luftrohr 2 ein, welches in das Innere des Doppelmantelgefäßes 4 führt, und strömt an dessen Unterseite aus. Der Luftstrom wird dann an der die UV-Strahlung abgebenden Innenwand des Doppelmantelgefäßes 4, in dem die Gasentladung stattfindet, vorbeigeführt und wird dabei mit Ozon angereichert. Die mit Ozon angereicherte Luft wird dem zu desinfizierenden Wasser zugeführt. Als besonders vorteilhaft erweist sich dabei die Zuführung mittels eines Injektors 7, der durch die in das Reaktorgehäuse 6 einströmende zu reinigende Flüssigkeit einen Sog an der Einströmöffnung 2.1 erzeugt. Es ist auch möglich, dass die am elektrodenlos angeregten UV-Strahler vorhandene stabförmige Antenne 3 als Hohlprofil ausgebildet ist, durch welches Luft oder Sauerstoff geleitet wird.
Mit dieser Anordnung wird eine kurzwellige Vakuum-UV-Strahlung mit einer Wellenlänge von 185 nm erzeugt. Die Strahlung kann mit hohem Wirkungsgrad genutzt werden, da sich bei der erfindungsgemäßen Anordnung kein Luftspalt zwischen dem zu bestrahlenden Gas befindet und zum anderen hochwertige Materialien aus synthetischem Quarz für das Doppelmantelgefäß 4 verwendet werden.
Als vorteilhaft ist dabei anzusehen, dass das für den Desinfektionsprozess benötigte Ozon simultan mit der Bestrahlung der Flüssigkeit von dem verwendeten UV-Strahler erzeugt wird.

### BEZUGSZEICHENLISTE

- 1: Magnetron
- 2: Luftrohr
2.1 Eintrittsöffnung
- 3: Antenne
- 4: Doppelmantelgefäß
4.1 Kopfteil
4.2 Gasentladungsraum
- 5: Quarzschutzrohr
- 6: Reaktorgehäuse
- 7: Injektor

## Patentansprüche

1. Verfahren zur UV-Bestrahlung von zu desinfizierenden Flüssigkeiten, bei dem mit einem Entladungsgefäß, das als Doppelmantelgefäß (4) in Form eines U-förmigen Rohres ausgebildet ist und aus einem Quarzglaskörper besteht, elektrodenlos UV-Strahlung angeregt wird, **dadurch gekennzeichnet, dass** im Entladungsgefäß kurzwellige Vakuum-UV-Strahlung mit einer Wellenlänge von 185 nm erzeugt wird und an der die UV-Strahlung abgebenden Innenwand des Doppelmantelgefäßes (4) ein Gasstrom aus Luft oder reinem Sauerstoff vorbeigeführt wird, der dabei mit Ozon angereichert wird und dieses mit Ozon angereicherte Gasgemisch der zu desinfizierenden Flüssigkeit zugeführt wird.

2. Verfahren nach Anspruch 1, **dadurch gekennzeichnet, dass** das Gasgemisch die der zu desinfizierenden Flüssigkeit beim Eintritt in ein Reaktorgehäuse (6) mittels eines Injektors (7) zugeführt wird.

3. Anordnung zur UV-Bestrahlung von Flüssigkeiten, insbesondere zur Durchführung des Verfahrens nach einem der Ansprüche 1 bis 3, mit einem Entladungsgefäß, als ein langgestrecktes Doppelmantelgefäß (4) mit U-förmigen Längsquerschnitt ausgebildet ist und aus einem Quarzglaskörper besteht, und bei dem sich in dem vom Doppelmantelgefäß (4) umschlossenen Raum eine Antenne (3) befindet, die am Kopfteil (4.1) des Gefäßes mit einem Magnetron (1) verbunden ist, **dadurch gekennzeichnet, dass** das Doppelmantelgefäß (4) an einem Reaktorgehäuse (6) so angeordnet ist, dass der Gasentladungsraum (4.2) in das Reaktorgehäuse (6) hineinragt, wobei die Antenne (3) direkt mit einem unmittelbar am Kopfteil (4.1) des Doppelmantelgefäßes (4) angeordneten Magnetron (1) verbunden ist und im Inneren des Doppelmantelgefäßes (4) ein Luftrohr (2) verläuft an dessen oberen Ende sich eine Gaseintrittsöfnung (2.1) befindet, von der aus ein Gasstrom aus Luft oder reinem Sauerstoff in das Innere des Doppelmantelgefäßes (4) geleitet wird, der durch eine an der Unterseite des Luftrohres (2) angeordneten Öffnung ausströmt und die mit Ozon angereicherte Luft dem zu desinfizierenden Wasser zugeführt wird.

4. Anordnung nach Anspruch 3, **dadurch gekennzeichnet, dass** die Antenne (3) die Form eines Hohlkörpers aufweist und das Luftrohr (2) in die Antenne (3) integriert ist.

## Claims

1. Procedure for the UV irradiation of liquids to be disinfected, with a discharge vessel formed as a double shell vessel (4) in the form of a U-shaped tube and consisting of a quartz glass body being used to excite electrodeless UV radiation, **characterized in that** short-wave vacuum UV radiation with a wave length of 185 nm is generated in the discharge vessel, and **in that** a gas flow of air or pure oxygen is led past the UV radiation emitting internal wall of the double shell vessel (4), being enriched with ozone in this process, and **in that** this ozone enriched gas mix is delivered to the liquid to be disinfected.

2. Procedure as claimed in claim 1, **characterized in that** the gas mix is delivered to the liquid to be disinfected when entering a reactor casing (6) using an injector (7).

3. Arrangement for the UV irradiation of liquids, more particularly for performing the procedure as claimed in any claim 1 through 2, using a discharge vessel which is formed as a long stretched-out double shell vessel (4) with an U-shaped longitudinal section and consists of a quartz glass body, and in which, in the space enclosed by the double shell vessel (4), an antenna (3) is located which is connected to a magnetron (1) at the head part (4.1) of the vessel, **characterized in that** the double shell vessel (4) is arranged at a reactor casing (6) such that the gas discharge space (4.2) projects into the reactor casing (6), with the antenna (3) being connected with a magnetron (1) located directly at the head part (4.1) of the double shell vessel (4), and **in that** an air tube (2) runs inside the double shell vessel (4), with a gas entry opening (2.1) located at the upper end of the air tube (2), and leads a gas flow of air or pure oxygen into the inside of the double shell vessel (4) which gas flow flows out through an opening located at the bottom side of the air tube (2), and delivers the ozone enriched air to the water to be disinfected.

4. Arrangement as claimed in claim 3, **characterized in that** the antenna (3) has the form of a hollow body, and **in that** the air tube (2) is integrated into the antenna (3).

## Revendications

1. Procédé d'exposition aux rayons UV de liquides à désinfecter, dans lequel un rayonnement UV est excité sans électrodes avec un tube à décharge conçu en un récipient à double paroi (4) en forme de tube en U et composé d'un corps en verre de quartz, **caractérisé en ce qu'**un rayonnement UV du vide de courtes longueurs d'onde de 185 nm est produit dans le tube à décharge et qu'un flux de gaz composé d'air ou d'oxygène pur est conduit le long de la paroi intérieure du récipient à double paroi (4), laquelle paroi émettant le rayonnement UV, ce flux de gaz étant enrichi en ozone et ce mélange gazeux enrichi en ozone étant introduit dans le liquide à désinfecter.

2. Procédé suivant la revendication 1, **caractérisé en ce que** le mélange gazeux est introduit dans le liquide à désinfecter à l'aide d'un injecteur (7) à l'admission dans le corps d'un réacteur (6).

3. Disposition pour l'exposition de liquides aux rayons UV, en particulier pour l'exécution du procédé suivant l'une des revendications 1 à 2, disposant d'un tube à décharge conçu comme un récipient allongé à double paroi (4) dont la coupe longitudinale est en forme de U et composé d'un corps en verre de quartz et dans lequel une antenne (3) se trouve dans la chambre incluse dans le récipient à double paroi (4), cette antenne étant reliée à un magnétron (1), au niveau de la tête (4.1) du récipient, **caractérisée en ce que** le récipient à double paroi (4) est disposé sur le corps d'un réacteur (6) de telle sorte que la chambre de décharge dans un gaz (4.2) s'enfonce dans le corps du réacteur (6), l'antenne (3) étant directement reliée à un magnétron (1) disposé directement au niveau de la tête (4.1) du récipient à double paroi (4), un tube à air (2) passant à l'intérieur du récipient à double paroi (4), un canal d'admission de gaz (2.1) se trouvant à l'extrémité supérieure de ce tube et un flux de gaz composé d'air ou d'oxygène pur étant amené, de ce canal, à l'intérieur du récipient à double paroi (4), ce flux de gaz s'échappant par une ouverture disposée sur la partie inférieure du tube à air (2) et l'air enrichi en ozone étant introduit dans l'eau à désinfecter.

4. Disposition suivant la revendication 3, **caractérisée en ce que** l'antenne (3) présente la forme d'un corps creux et que le tube à air (2) est intégré dans l'antenne (3).
